**Europäisches Patentamt**

**European Patent Office**

**Office européen des brevets**

(19)

(11) Veröffentlichungsnummer: **0 236 541**
**A2**

(12) # EUROPÄISCHE PATENTANMELDUNG

(21) Anmeldenummer: **86110929.6**

(22) Anmeldetag: **07.08.86**

(51) Int. Cl.⁴: **F16J 15/38**

(30) Priorität: **08.03.86 DE 3607815**

(43) Veröffentlichungstag der Anmeldung:
**16.09.87 Patentblatt 87/38**

(84) Benannte Vertragsstaaten:
**AT BE CH DE FR GB IT LI LU NL SE**

(71) Anmelder: **Firma Carl Freudenberg**
**Höhnerweg 4**
**D-6940 Weinheim/Bergstrasse(DE)**

(72) Erfinder: **Kraus, Reinhold**
**Hoffeldstrasse 8**
**D-6942 Mörlenbach(DE)**

(74) Vertreter: **Weissenfeld-Richters, Helga, Dr.**
**Höhnerweg 2**
**D-6940 Weinheim/Bergstrasse(DE)**

(54) **Gleitringdichtung.**

(57) Gleitringdichtung mit einem verdrehsicher in einem Gehäuse (5) festgelegten Gleitring (1), wenigstens einem Druckfederelement (8) zur axialen Abstützung des Gleitringes auf dem Gehäuseboden sowie einem mit dem Gehäuse verbundenen Anschlag zur Begrenzung des Federweges der Druckfeder. Der Anschlag besteht aus zwei einander gegenüberliegenden und in derselben Radialebene angeordneten, nach innen weisenden Vorsprüngen des Gehäuses, die einen Abstand vom Gehäuseboden haben. Zwischen den Vorsprüngen (7) und der Stirnseite des Druckfederelementes (8) ist eine Ringscheibe angeordnet. Der Außendurchmesser der Ringscheibe ist größer als der gegenseitige Abstand A der Vorsprünge und zugleich kleiner als der Abstand zwischen mindestens einem Vorsprung und der Stelle an der gegenüberliegenden Innenwandung des Gehäuses, an der diese bei geneigt eingeführter Ringscheibe und maximaler Zusammendrückung des Druckfederelementes von der Ringscheibe berührt wird.

Fig. 1

## Gleitringdichtung

Die Erfindung betrifft eine Gleitringdichtung, umfassend einen verdrehsicher in einem Gehäuse festgelegten Gleitring, wenigstens ein Druckfederelement zur axialen Abstützung des Gleitringes auf dem Gehäuseboden sowie einen mit dem Gehäuse verbundenen Anschlag zur Begrenzung des Federweges der Druckfeder.

Auf eine Gleitringdichtung der vorgenannten Art nimmt die deutsche Patentanmeldung G 20 692 Bezug. Der Anschlag für die Begrenzung des Federweges des Druckfederelementes wird dabei durch nach außen umgebogene Blechlappen des Gehäuses gebildet. Seine Erzeugung ist insofern schwierig, als die Herstellung der entsprechenden Umbiegungen des Gehäuses erst im Anschluß an das vorausgegangene Einfügen des Druckfederelementes möglich ist und durch dasselbe eine Behinderung erfährt.

Der Erfindung liegt die Aufgabe zugrunde, eine Gleitringdichtung der vorgenannten Art derart weiterzuentwickeln, daß der Federweg des Druckfederelementes durch einen Anschlag begrenzt wird, der die Erzeugung von bleibenden Veränderungen an die Gleitringdichtung bildenden Einzelteilen während oder nach deren Zusammenfügung entbehrlich macht.

Diese Aufgabe wird erfindungsgemäß bei einer Gleitringdichtung der eingangs genannten Art dadurch gelöst, daß der Anschlag aus zwei einander gegenüberliegenden, in derselben Radialebene angeordneten, nach innen weisenden Vorsprüngen des Gehäuses besteht, daß die Vorsprünge und der Gehäuseboden einen axialen Abstand haben, daß zwischen der Stirnseite des Druckfederelementes und den Vorsprüngen eine Ringscheibe angeordnet ist und daß die Ringscheibe einen Außendurchmesser aufweist, der größer ist als der gegenseitige Abstand der Vorsprünge und zugleich kleiner als der Abstand zwischen mindestens einem Vorsprung und der Stelle an der gegenuberliegenden Innenwandung des Gehäuses, an der diese bei geneigt eingeführter Ringscheibe und maximaler Zusammendrückung des Druckfederelementes von der Ringscheibe berührt wird. Die Ringscheibe ist rotationssymmetrisch ausgebildet. Gehäuse, Druckfederelement und Ringscheibe lassen sich leicht und ohne nachträgliche Verformungsvorgänge an einem der beteiligten Elemente vornehmen zu müssen vereinen und als geschlossene Baueinheit lagern und montieren. Für die Herstellung und Verwendung der erfindungsgemäßen Gleitringdichtung ist das von großem Vorteil.

Die Ringscheibe liegt in der betriebsfähigen Gleitringdichtung an der Rückseite des Gleitringes an und bewirkt eine Übertragung und gegebenenfalls Vergleichmäßigung der von dem Druckfederelement ausgeübten Kräfte. Eine biegesteife Ausbildung der Ringscheibe hat sich unter diesem Gesichtspunkt als vorteilhaft bewährt.

Sie läßt es ausreichend erscheinen, die Vorsprünge im einfachsten Falle säulenförmig zu gestalten und ihnen somit keine nennenswerte Erstreckung in Umfangsrichtung der Gleitringdichtung zu verleihen. Entsprechend gestaltete Vorsprünge können zugleich als Verdrehsicherung für den nachträglich einzufügenden Gleitring dienen und greifen zweckmäßig in sich in axialer Richtung erstreckende, nach außen offene Nuten des Gleitringes ein.

Die Vorsprünge können auch durch sickenartig ausgebildete Einwölbungen der Wandung des Gehäuses gebildet werden. Die Erzeugung ist bei geringer Wandstärke des Gehäuses auf eine besonders einfache Weise möglich.

Für Anwendungsfälle, in denen mit starken Erschütterungen der das Gehäuse, das Druckfederelement und die Ringscheibe umfassenden Einheit während der Montage gerechnet werden muß hat es sich als vorteilhaft bewährt, wenn wenigstens einer der Vorsprünge in seinem zentralen Bereich von wenigstens einer sich in Umfangsrichtung erstreckenden, in Richtung der Dichtungsachse offenen Aussparung unterbrochen bzw. im Bereich einer entsprechenden Aussparung ganz weggelassen ist. In fertigungstechnischer Hinsicht resultieren hieraus Vorteile. Eine identische Ausbildung der nach innen weisenden Vorsprünge ist ebenfalls möglich.

Zur Erleichterung des Einfügens ist die Ringscheibe in axialer Richtung möglichst dünn bemessen und kann beispielsweise eine Dicke von 0,5 bis 3 mm haben. Sie besteht im Regelfalle aus Metall und weist bereits hierdurch eine gute Biegesteifigkeit auf. Die entsprechende Eigenschaft läßt sich weiter verstärken durch eine axiale Verstärkung der Ringscheibe im Bereich ihres Innendurchmessers.

Das Druckfederelement kann aus mehreren gleichmäßig auf dem Umfang verteilten Spiralfedern gebildet werden, wobei es sich als zweckmäßig erwiesen hat, wenn die Spiralfedern in Bohrungen des Gehäusebodens axial geführt sind. Sie sind in diesem Falle unabhängig voneinander beweglich und gewährleisten in Verbindung mit einer biegesteifen Ausbildung der Ringscheibe eine besonders gleichmäßige Federbelastung des Gleitringes auf seinem gesamten Umfang.

Eine beispielhafte Ausführung der erfindungsgemäßen Gleitringdichtung ist in der beigefügten Zeichnung dargestellt. Sie wird nachfolgend näher erläutert. Es zeigen:

Figur 1 eine Gleitringdichtung der erfindungsgemäßen Art in bestimmungsgemäßer Verwendung

Figur 2 das Gehäuse der in Figur 1 gezeigten Gleitringdichtung in der Vorderansicht

Figur 3 das Einfügen der Ringscheibe in das in Figur 2 gezeigte Gehäuse in längsgeschnittener Darstellung

Figur 4 die in das Gehäuse eingefügte Ringscheibe in montagefertiger Form.

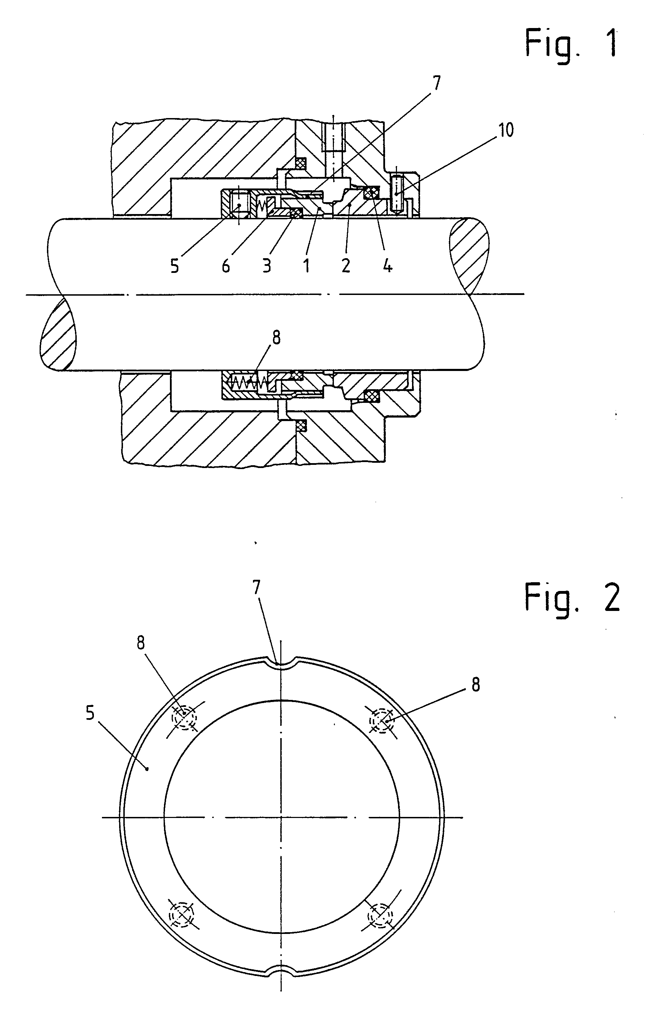

Die in Figur 1 gezeigte Gleitringdichtung umfaßt als zentrale Elemente den Gleitring 1 und den Gegenring 2.

Der Gleitring 1 ist durch die O-Ringdichtung 3 flüssigkeitsdicht, jedoch axial verschiebbar auf der Oberfläche der abgedichteten Welle gelagert. Er weist im Bereich seines Außenumfanges gleichmäßig verteilte, nach außen offene Nuten auf, in welche die Vorsprünge 7 des Gehäuses 5 eingreifen. Das Gehäuse ist durch eine Verschraubung mit der Oberfläche der abgedichteten Welle verbunden und es dient der Übertragung der Drehbewegung der Welle auf den Gleitring 1.

Der Gegenring 2 ist durch die O-Ringdichtung 4 gegenüber der aufnehmenden Gehäusebohrung abgedichtet. Er ist mit einer sich in axialer Richtung und nach außen geöffneten Nute versehen, in welche der sich in radialer Richtung erstreckende und als Verdrehsicherung dienende Stift 10 eingreift. Der Gegenring 2 verharrt dadurch unabhängig von einer evtl. Drehbewegung der abgedichteten Welle stets in einer ruhenden Position.

Der Gleitring 1 ist durch die rotationssymmetrische Ringscheibe 6 und das in axialer Richtung wirksame Druckfederelement 8 auf dem Gehäuse 5 elastisch abgestützt. Er berührt dadurch weitgehend unabhängig von evtl. eintretendem Verschleiß die Stirnfläche des Gegenringes 2 mit einer im wesentlichen gleichmäßigen Anpressung. Hierauf beruht maßgeblich das erzielte Abdichtungsergebnis.

Das Druckfederelement 8 wird durch vier gleichmäßig auf dem Umfang verteilte Spiralfedern gebildet. Diese sind in in axialer Richtung offenen Bohrungen des Gehäuses gelagert und werden durch dieselben ausreichend geführt. Die Bohrungen umschließen die Spiralfedern mit geringem Spiel.

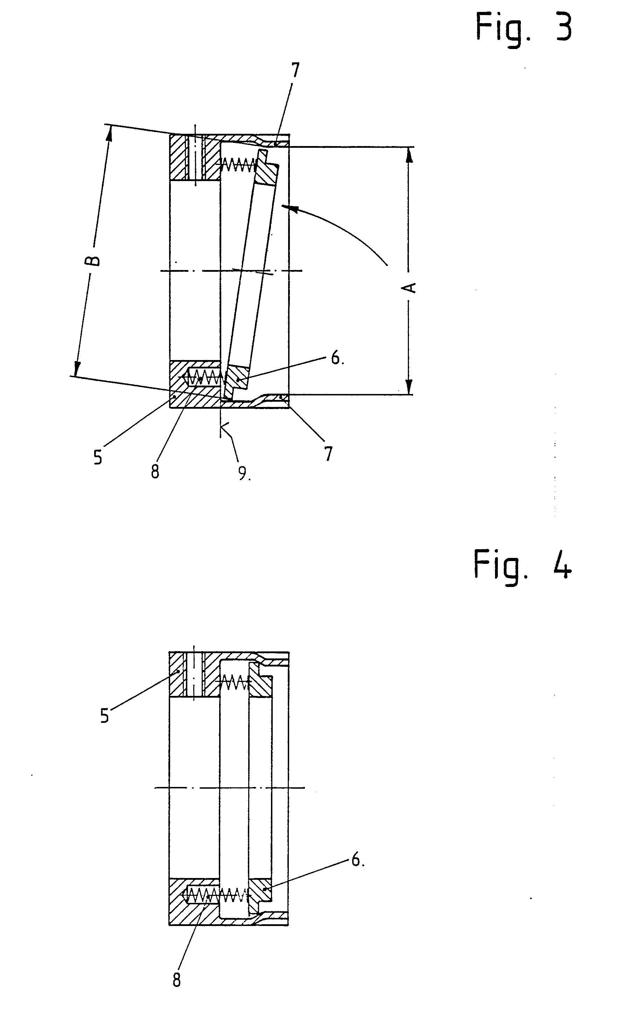

In Figur 2 ist das in Figur 1 in längsgeschnittener Darstellung gezeigte Gehäuse 5 der Gleitringdichtung in der Vorderansicht wiedergegeben. Die gemeinsam das Druckfederelement 8 bildenden Spiralfedern sind gleichmäßig auf dem Umfang verteilt und die Außenwandung des Gehäuses ist an zwei einander gegenüberliegenden Stellen unter Bildung der Vorsprünge 7 eingewölbt. Die Vorsprünge haben, in Umfangsrichtung betrachtet, nur eine sehr geringe Erstreckung. Ihre Erstreckung in axialer Richtung wird durch die Figuren 3 und 4 verdeutlicht.

In Figur 3 ist das in Figur 2 in der Vorderansicht gezeigte Gehäuse längsgeschnitten dargestellt, wobei die Ringscheibe 6 nach vorausgegangener Einfügung der Spiralfedern in die aufnehmenden Bohrungen des Gehäuses in einer schrägen Lage eingefügt wird.

Es ist deutlich zu erkennnen, daß der Außendurchmesser der Ringscheibe so bemessen ist, daß ein Vorbeiführen des oberen Randes an dem dort angeordneten Vorsprung 7 gerade dann noch möglich ist, wenn die gegenüberliegende, unten angeordnete Spiralfeder in maximaler Weise zusammengedrückt ist und die Ringscheibe in diesem Bereich die Innenwandung des Gehäuses 5 berührt. Die Ringscheibe 6 wird anschließend in eine rotationsnormale Lage gekippt und gelangt nach dem Wegfall der für die Zusammenpressung des Druckfederelementes erforderlichen Kraft automatisch an der dem Gehäuseboden 5 zugewandten Seite der einander gegenüberliegenden Vorsprünge 7 zur Anlage. Die das Gehäuse 5, das Druckfederelement 8 und die Ringscheibe 6 umfassende, montagefertige Einheit ist in Figur 4 gezeigt.

## Ansprüche

1. Gleitringdichtung, umfassend einen verdrehsicher in einem Gehäuse festgelegten Gleitring, wenigstens ein Druckfederelement zur axialen Abstützung des Gleitringes auf dem Gehäuseboden sowie einen mit dem Gehäuse verbundenen Anschlag zur Begrenzung des Federweges der Druckfeder, dadurch gekennzeichnet, daß der Anschlag aus zwei einander gegenüberliegenden, in derselben Radialebene angeordneten, nach innen weisenden Vorsprüngen (7) des Gehäuses (5) besteht, daß die Vorsprünge (7) und der Gehäuseboden (9) einen Abstand haben, daß zwischen der Stirnseite des Druckfederelementes (8) und den Vorsprüngen (7) eine Ringscheibe (6) angeordnet ist und daß die Ringscheibe (6) einen Außendurchmesser aufweist, der größer ist als der gegenseitige Abstand (A) der Vorsprünge (7) und zugleich kleiner als der gegenseitige Abstand (B) zwischen mindestens einem Vorsprung (7) und der Stelle an der gegenüberliegenden Innenwandung des Gehäuses (5), an der diese bei geneigt eingeführter Ringscheibe und maximaler Zusammendrückung des Druckfederelementes (8) von der Ringscheibe (6) berührt wird.

2. Gleitringdichtung nach Anspruch 1, dadurch gekennzeichnet, daß mindestens einer der Anschläge (7) von mindestens einer sich in Umfangsrichtung erstreckenden, in Richtung der Dichtungsachse offenen Aussparung unterbrochen ist.

3. Gleitringdichtung nach Anspruch 1 bis 2, dadurch gekennzeichnet, daß die Anschläge (7) identisch ausgebildet sind.

4. Gleitringdichtung nach Anspruch 1 bis 3, dadurch gekennzeichnet, daß die Anschläge durch Einwölbungen der Gehäusewandung gebildet sind.

5. Gleitringdichtung nach Anspruch 1 bis 4, dadurch gekennzeichnet, daß die Ringscheibe (6) im Bereich ihres Innendurchmessers axial verdickt ist.

6. Gleitringdichtung nach Anspruch 1 bis 5, dadurch gekennzeichnet, daß das Druckfederelement (8) durch gleichmäßig auf dem Umfang verteilte Spiralfedern gebildet ist.

7. Gleitringdichtung nach Anspruch 6, dadurch gekennzeichnet, daß die Spiralfedern in Bohrungen des Gehäusebodens (9) axial geführt sind.

0 236 541

Fig. 1

Fig. 2

Fig. 3

Fig. 4